(19) Europäisches Patentamt
European Patent Office
Office européen des brevets

(11) **EP 3 237 932 B1**

(12) **FASCICULE DE BREVET EUROPEEN**

(45) Date de publication et mention de la délivrance du brevet:
**21.08.2019 Bulletin 2019/34**

(21) Numéro de dépôt: **15820503.9**

(22) Date de dépôt: **18.12.2015**

(51) Int Cl.:
**G01T 1/29** (2006.01)    **G01T 7/00** (2006.01)

(86) Numéro de dépôt international:
**PCT/EP2015/080661**

(87) Numéro de publication internationale:
**WO 2016/102406 (30.06.2016 Gazette 2016/26)**

(54) **PROCÉDÉ DE CALIBRATION D'UN DÉTECTEUR DE RAYONNEMENT IONISANT ET DISPOSITIF ASSOCIÉ**

VERFAHREN ZUR KALIBRIERUNG EINES DETEKTORS FÜR IONISIERENDE STRAHLUNG UND ZUGEHÖRIGE VORRICHTUNG

METHOD FOR CALIBRATING AN IONISING RADIATION DETECTOR AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2014 FR 1463095**

(43) Date de publication de la demande:
**01.11.2017 Bulletin 2017/44**

(73) Titulaires:
• **Commissariat à l'Énergie Atomique et aux Énergies Alternatives**
**75015 Paris (FR)**
• **Morpho**
**92130 Issy-les-Moulineaux (FR)**

(72) Inventeurs:
• **STANCHINA, Sylvain**
**38000 Grenoble (FR)**
• **MONTEMONT, Guillaume**
**38000 Grenoble (FR)**

(74) Mandataire: **Brevalex**
**56, Boulevard de l'Embouchure**
**B.P. 27519**
**31075 Toulouse Cedex 2 (FR)**

(56) Documents cités:
**FR-A1- 2 950 979    US-A1- 2011 297 838**

• **HE Z ET AL: "1-D position sensitive single carrier semiconductor detectors", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. 380, no. 1-2, 1 octobre 1996 (1996-10-01), pages 228-231, XP004206400, ISSN: 0168-9002, DOI: 10.1016/S0168-9002(96)00352-X cité dans la demande**

**Description**

## DOMAINE TECHNIQUE

La présente invention se rapporte au domaine des détecteurs de rayonnement ionisant, en particulier pour des applications nucléaires, médicales ou en contrôle non destructif.

## ÉTAT DE LA TECHNIQUE ANTÉRIEURE

La spectrométrie est une méthode communément utilisée dans le domaine de la détection de rayonnements ionisants. Elle consiste à exposer un détecteur face à une source de rayonnements ionisants, à détecter une pluralité d'interaction de rayonnements dans un matériau détecteur, à estimer l'énergie cédée, dans le matériau détecteur, par chaque interaction, afin d'obtenir un histogramme représentant le nombre d'interactions détectées pour différentes plages d'énergies données. Cet histogramme est appelé spectre d'énergie.

D'une manière générale, un dispositif de spectrométrie comporte un matériau détecteur, apte à induire une interaction avec un rayonnement ionisant incident. Chaque interaction génère des porteurs de charges, lesquels sont collectés par une électrode. Un circuit électronique, raccordé à l'électrode, permet de générer un signal électrique à partir des porteurs de charges collectés. Le signal électrique prend généralement la forme d'une impulsion, dont l'amplitude dépend du nombre de porteurs de charges collectés. Une mémoire, disposée en aval du circuit électronique, permet de rassembler l'ensemble des impulsions formées, chaque impulsion correspondant à une interaction dans le matériau détecteur. Cette mémoire classe alors les impulsions en fonction de leur amplitude, pour fournir un histogramme comportant le nombre d'impulsions détectées en fonction de leur amplitude. Cet histogramme est appelé spectre en amplitude.

L'amplitude de chaque impulsion détectée dépend de la quantité de charge collectée par les porteurs de charges suite à l'interaction, cette quantité dépendant de l'énergie perdue par le rayonnement incident au cours de son interaction dans le matériau détecteur, cette énergie étant également appelée énergie de l'interaction.

Ainsi, l'amplitude de chaque impulsion dépend de l'énergie perdue par le rayonnement incident au cours de l'interaction ayant donné lieu à ladite impulsion.

Dans les dispositifs de spectrométrie gamma, cette dépendance correspond généralement à une relation de proportionnalité. Autrement dit, l'amplitude d'une impulsion produite par le circuit électronique relié au matériau détecteur est proportionnelle à l'énergie perdue par le rayonnement ionisant au cours de son interaction. Lorsque le rayonnement est stoppé dans le matériau détecteur, par effet photoélectrique ou par de multiples diffusions inélastiques, il cède toute son énergie. L'amplitude de l'impulsion collectée est alors proportionnelle à l'énergie du rayonnement incident.

La relation entre amplitude et énergie est réalisée en irradiant le détecteur à l'aide d'une source de référence, délivrant un rayonnement dont on connaît l'énergie. Cette opération est l'étalonnage en énergie. Par exemple, dans le cadre de la spectrométrie gamma, on expose le détecteur à une source de type $^{137}$Cs, produisant des photons dont l'énergie est de 661,6 keV. On peut également utiliser une source de $^{60}$Co produisant des photons dont l'énergie 1173 keV et 1332 keV. On peut également utiliser une source de $^{57}$Co, produisant des photons dont l'énergie est de 122 keV. On effectue un spectre d'amplitude des signaux mesurés lorsque le détecteur est exposé à un tel rayonnement, puis on attribue manuellement les valeurs d'énergies connues aux principaux pics du spectre en énergie.

Durant l'étalonnage en énergie, le détecteur acquiert un spectre, comportant des pics, et en particulier des pics dits photoélectriques, correspondant aux interactions au cours desquelles le rayonnement incident cède toute son énergie dans le matériau détecteur. Il est alors possible d'identifier ces pics et de leur faire correspondre, manuellement, une des énergies des photons produits par la source de référence.

Avec une telle calibration, le spectre en amplitude devient un spectre en énergie, du fait de la relation amplitude énergie ainsi établie.

Un tel étalonnage suppose tout d'abord une identification précise des pics. Sa précision dépend donc de la précision avec laquelle les pics sont identifiés.

Par ailleurs, la correspondante amplitude du pic (généralement l'amplitude à laquelle le pic atteint son maximum) et l'énergie est réalisée manuellement, ce qui n'est pas envisageable lorsqu'on met en oeuvre un détecteur mettant en oeuvre un nombre de voies de mesure dépassant quelques unités, et en particulier lorsque le détecteur est un imageur, comportant plusieurs centaines voire milliers de voies de mesure.

La demande de brevet US2011297838 décrit un procédé de calibration d'un dispositif de détection de rayonnement ionisant, le dispositif comportant un détecteur, comportant un matériau détecteur semi-conducteur, s'étendant entre deux électrodes, au moins une électrode étant apte à générer un signal d'amplitude lors d'une interaction d'un rayonnement ionisant dans ledit matériau détecteur. Le procédé selon cette demande comprend en outre une étape d'irradiation du détecteur à l'aide d'une source de référence connue, de façon à générer des interactions dans le matériau détecteur, et l'étape de détection d'une pluralité d'interactions dans le détecteur lors de ladite irradiation et, pour chaque interaction, mesure d'au moins une amplitude d'un signal électronique généré par une électrode et détermination de la valeur d'au moins un paramètre de position de l'interaction en fonction de ladite amplitude. Quant à la demande FR2950979 décrit un détecteur à semi-conducteur de rayonnement ionisants comprenant une cathode unique et un ensemble d'anodes.

## EXPOSÉ DE L'INVENTION

L'invention propose une solution alternative à cet étalonnage en énergie, pouvant être mise en oeuvre automatiquement.

Un premier objet de l'invention est un procédé de calibration d'un dispositif de détection de rayonnement ionisant, le dispositif comportant un détecteur apte à générer des charges électriques sous l'effet d'une interaction d'un rayonnement ionisant dans ledit détecteur, le procédé comportant les étapes suivantes :

a) Irradiation du détecteur à l'aide d'une source de référence connue, ladite source produisant un rayonnement ionisant de façon à générer des interactions dans le détecteur,

b) Sélection d'une pluralité de coefficients de corrections j, et détermination d'une pluralité de spectres de références $Spref_j$, chaque spectre de référence étant associé à un coefficient de correction j, chaque spectre de référence représentant une distribution de l'amplitude A du signal S généré lorsque le détecteur est irradié par ladite source de référence Sref, l'amplitude A du signal S étant pondérée par ledit coefficient de correction j.

c) Détection d'une pluralité d'interactions dans le détecteur lors de ladite irradiation et, pour chaque interaction, mesure de l'amplitude A d'un signal électronique S généré par une électrode,

d) Pour chaque interaction détectée, détermination d'une fonction de calibration F telle que

■ chaque fonction de calibration F est définie sur une pluralité de coefficients de correction j,
■ chaque terme F(j) de ladite fonction de calibration représente une probabilité associée audit coefficient de correction j
■ chaque terme F(j) étant mis à jour, à chaque interaction détectée, en combinant l'amplitude A mesurée au cours de cette interaction avec chaque spectre de référence $Sp_{refj}$,

e) Détermination d'un facteur de correction $j_{corr}$ en identifiant un point remarquable de ladite fonction de calibration $F_k$.

Le facteur de correction $j_{corr}$ est ainsi défini lors d'une phase de calibration du détecteur, préalablement à une phase de détection.

Durant la phase de détection, lors de chaque interaction, le signal S issu de cette interaction, et notamment son amplitude A, est alors modulé par le facteur de correction j ainsi établi.

Ce procédé s'effectue automatiquement, sans mettre en oeuvre une identification de pics, et sans nécessiter d'une correspondance manuelle entre l'amplitude correspondant à un pic et une valeur d'énergie prédéterminée.

L'étape b) peut comprendre :

i Le chargement d'un spectre de référence initial $Sp_{ref}$, préalablement enregistré dans une mémoire, correspondant à ladite source de référence $S_{ref}$, ce spectre $Sp_{ref}$ représentant la distribution de probabilité de l'amplitude du signal détecté lorsque le détecteur est irradié par ladite source de référence $S_{ref}$.

ii A partir du spectre de référence initial $Sp_{ref}$, détermination d'une pluralité de spectres de références $Sp_{refj}$, chaque spectre de référence $Sp_{refj}$ étant obtenu à partir du spectre de référence initial $Sp_{ref}$, chaque valeur $Sp_{refj}(i)$ du spectre de référence étant obtenu à partir de la valeur Spref(i/j).

Au cours de cette étape, les coefficients de correction j considérés peuvent être déterminés arbitrairement entre une valeur minimale $j_{min}$ et une valeur maximale $j_{Max}$.

Le terme coefficient de correction désigne un nombre strictement positif j, destiné à moduler le spectre de référence Spref correspondant à la source de référence, en normalisant la variable i, correspondant à l'amplitude (ou à l'énergie) de façon à établir un spectre de référence associé au coefficient de correction j $Spref_j$ tel que $Spref_j(i/j) = Spref (i) * K_{norm}(j)$, le terme $K_{norm}(j)$ étant un terme de normalisation pouvant être égal à 1 ou égal à 1/j.

L'étape d) peut comprendre les étapes suivantes :

i Initialisation de la fonction de calibration F
ii A chaque interaction détectée, mise à jour de la fonction de calibration, en additionnant, à chaque terme F(j) de cette fonction, la valeur du spectre de référence corrigé $Spref_j (A)$ à ladite amplitude A
iii Répétition de l'étape ii jusqu'à l'atteinte d'un critère d'arrêt prédéfini

L'initialisation de la fonction de calibration F peut notamment être telle que $F (j) = F^0(j)$, chaque valeur $F^0(j)$ représentant la valeur initiale du terme F (j). L'ensemble des valeurs initiales $F^0(j)$ peuvent être égales à un même nombre, par exemple 0.

Le critère d'arrêt prédéfini peut être un nombre de mise à jours prédéterminé pour chaque fonction de calibration F, ou une durée d'irradiation du détecteur prédéfinie, ou un nombre d'interactions détectées prédéfini, ou une valeur maximale atteinte par un ou plusieurs termes F(j) d'une ou plusieurs fonctions de calibration F.

Au cours de l'étape e), le facteur de correction $j_{corr}$ peut être déterminé en identifiant la valeur de j maximisant la valeur de la fonction de calibration $F_k$, auquel cas :

$$j_{corr} = argmax_j \left[ F (j) \right]$$

Le spectre de référence initial Spref ou chaque spectre de référence Spref$_j$ comporte de préférence une ou une pluralité de pics significatifs isolés les uns des autres. De préférence, le nombre de pics P$_1$...P$_n$ significatifs constituant le spectre de référence est compris entre 1 et 10, et de préférence strictement supérieur à 1. Par pic significatif, on entend un pic dont la hauteur est supérieure à 2 fois, de préférence 5 fois, le niveau du bruit de fond, de part et d'autre de ce pic.

Selon un exemple, l'étape d) comprend une mise à jour itérative de la fonction de calibration F$_k$ telle que Pour tout j compris entre j$_{min}$ et j$_{max}$, F$^p$ (j) = F$^{p-1}$ (j)+Spref$_j$(A)

où :

- F$^{p-1}$(j) est la valeur du terme F (j) précédent la p$^{ème}$ itération,

- F$^p$(j) est la valeur du terme F (j) après la p$^{ème}$ itération,

- A est l'amplitude du signal S mesuré par une électrode suite à une interaction. Dans cet exemple, on considère le signal S$_{A0}$ mesuré par l'anode gagnante A0, donc A = A$_{A0}$.

- p est l'indice d'itération correspondant au rang de la mise à jour. Lors de la première mise à jour, p= 1.

Selon une variante :

▪ les étapes c), d) et e) sont répétées de façon itérative, chaque étape e) aboutissant à la détermination d'un facteur de correction partiel $j^q$, q désignant le rang de l'itération,
▪ et, suite à la première itération, l'étape d) comprend la mise à jour de chaque terme F(j) en pondérant ladite amplitude A par le produit des facteurs de correction partiels $j^1$ ...$j^q$, ces facteurs de correction partiels ayant déterminés au cours des q itérations précédentes.

Le procédé comporte alors, lors de l'étape e) de la dernière itération, la détermination du facteur de correction j$_{corr}$ en fonction du produit des facteurs de correction partiels $j^1$ ...$j^q$ déterminés lors des itérations successives, ce produit correspondant à un facteur de correction intermédiaire.

Ainsi, on effectue une première détermination d'un premier facteur de correction partiel en mettant en oeuvre les étapes a) à e) précédemment décrites, ce facteur de correction partiel étant noté j$^1$. Ensuite, on réitère les étapes c), d) et e), et, lors de la mise à jour de la fonction de calibration F$_k$, l'amplitude A du signal S est pondérée par le facteur de correction partiel $j^1_k$ déterminé lors de l'itération précédente.

D'une façon générale, lors de chaque itération q, on réitère les étapes c), d) et e), de façon à obtenir un facteur de correction partiel $j^q$ et, lors de l'itération suivante, la mise à jour de la fonction de calibration F$_k$ est réalisée en pondérant l'amplitude A du signal S considéré par le produit des facteurs de correction partiels $j^1$ ...$j^q$ déterminés lors des q itérations précédentes. Ce produit correspond à un facteur de correction intermédiaire.

Le détecteur peut être :

- un détecteur de type scintillateur, comprenant un matériau détecteur scintillateur, apte à produire des photons de scintillation, notamment visibles, lors d'une interaction avec un rayonnement ionisant, ce matériau étant couplé à un photodétecteur, apte à produire des charges électriques en réponse auxdits photons de scintillation

- un détecteur de type semi-conducteur, comprenant un matériau détecteur semi-conducteur, disposé entre deux électrodes, ledit matériau détecteur semi-conducteur étant apte à générer des charges électriques lors d'une interaction avec un rayonnement ionisant.

Un deuxième objet de l'invention est un dispositif de détection d'un rayonnement ionisant, permettant la mise en oeuvre du procédé précédemment décrit. Un tel dispositif comprend notamment :

a) un détecteur, comportant un matériau détecteur semi-conducteur, s'étendant entre deux électrodes, le détecteur étant apte à générer des porteurs de charges sous l'effet d'une interaction avec le rayonnement ionisant
b) un circuit électronique de traitement, apte à former un signal S à partir de porteurs de charges collectés par une électrode lors d'une interaction et d'en déterminer l'amplitude A.
c) un circuit électronique de calibration, configuré pour mettre en oeuvre les étapes b), c) et d) et e) du procédé de calibration décrit ci-dessus.

**DESCRIPTION DES FIGURES**

La figure 1A représente un schéma du dispositif de détection ;

La figure 1B représente un schéma du dispositif de détection selon un autre mode de réalisation ;

La figure 2A représente les différentes étapes du procédé de calibration selon un premier mode de réalisation de l'invention ;

La figure 2B représente les différentes étapes du procédé de calibration selon une variante d'un premier mode de réalisation de l'invention ;

La figure 3 représente un exemple de spectre de référence Spref ;

La figure 4 représente une pluralité de spectres de référence corrigés Spref$_j$;

La figure 5 représente une vue en 3 dimensions d'une pluralité de spectres de référence corrigés Spref$_j$;

La figure 6 représente une fonction de calibration F, de laquelle il est possible d'extraire un facteur de correction j$_{corr}$.

## EXPOSÉ DETAILLÉ DE MODES DE RÉALISATION PARTICULIERS

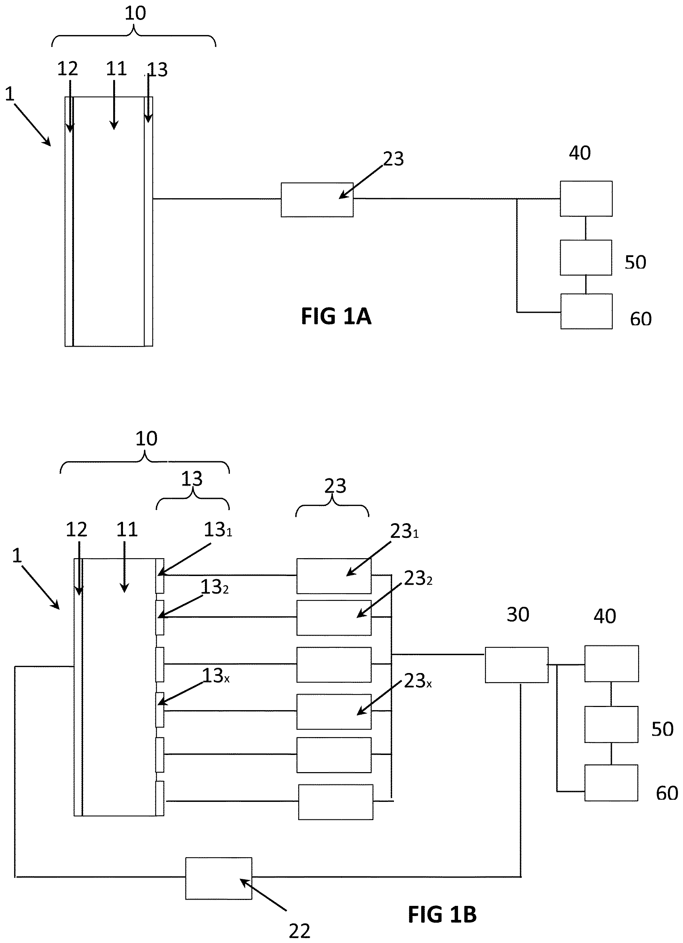

La figure 1 représente un dispositif de détection 1 d'un rayonnement ionisant selon l'invention. Il comprend un détecteur 10, réalisé dans un matériau semi-conducteur 11, apte à être polarisé par une cathode 12 et une anode 13. Le matériau semi-conducteur est, dans cet exemple, CdTe. Il peut s'agir d'un autre matériau semi-conducteur communément utilisé pour la détection de rayonnements ionisants (Si, CdZnTe...). L'épaisseur du matériau est de quelques millimètres, par exemple 5 mm.

Dans un matériau de type CdTe, les électrons présentent des propriétés de mobilité de charges plus favorables. Aussi, les signaux donnant une information la plus précise sur l'énergie déposée par une interaction dans le détecteur sont ceux issus de l'anode 13.

Le dispositif comprend également un circuit électronique 23 d'amplification, associé à l'anode, de façon à produire un signal d'anode dont l'amplitude est proportionnelle au nombre de porteurs de charges collectés par l'anode à la suite d'une interaction. Un tel circuit est connu et ne sera pas décrit dans le détail.

Le circuit électronique d'amplification peut également être connecté non pas à l'anode, mais à la cathode. Selon une variante, l'anode et la cathode disposent chacune de leur propre circuit d'amplification.

Ainsi, d'une façon générale, chaque interaction dans le détecteur entraîne la collection de porteurs de charges par au moins une électrode E, (anode A ou cathode K) de façon à établir un signal électronique S dont l'amplitude est A.

Le terme amplitude désigne la hauteur maximale d'un signal, lorsque ce dernier a la forme d'une impulsion. Il peut également s'agir de l'intégrale de ce signal, ou toute autre fonction de la hauteur maximale ou de l'intégrale. D'une façon générale, l'amplitude représente la quantité de charges collectées par l'électrode E lors d'une interaction.

Le dispositif de détection 1 comprend également un circuit électronique de calibration 40, apte à mettre en oeuvre le procédé de calibration du détecteur. Ce circuit est un élément important de l'invention et sera décrit par la suite.

Le dispositif de détection 1 comprend également un circuit électronique de correction 50, apte à appliquer, à un signal d'électrode S, un facteur de correction j$_{corr}$ . En général, on affecte ce facteur de correction à l'amplitude A du signal S de l'anode A (ou, le cas échéant, au signal de la cathode K).

Le dispositif de détection est apte à détecter un rayonnement ionisant. Le terme rayonnement ionisant désigne un rayonnement apte à générer des porteurs de charges dans le détecteur 11. Il peut en particulier s'agir de rayonnement X, y, de particules chargées (notamment $\alpha$ ou $\beta$) ou de neutrons.

Le circuit d'amplification 23 est connu et ne sera pas décrit dans le détail.

Selon un autre mode de réalisation, l'anode 13 du détecteur est divisée en une pluralité d'anodes élémentaires 13$_1$...13x, chaque anode élémentaire étant respectivement reliée à un circuit électronique d'amplification 23$_1$...23$_x$. Un circuit de localisation 30 est apte à déterminer l'anode élémentaire ayant collecté le signal issu de l'interaction et appliquer le procédé de calibration à cette anode. La cathode 12 peut également comporter un circuit électronique d'amplification 22.

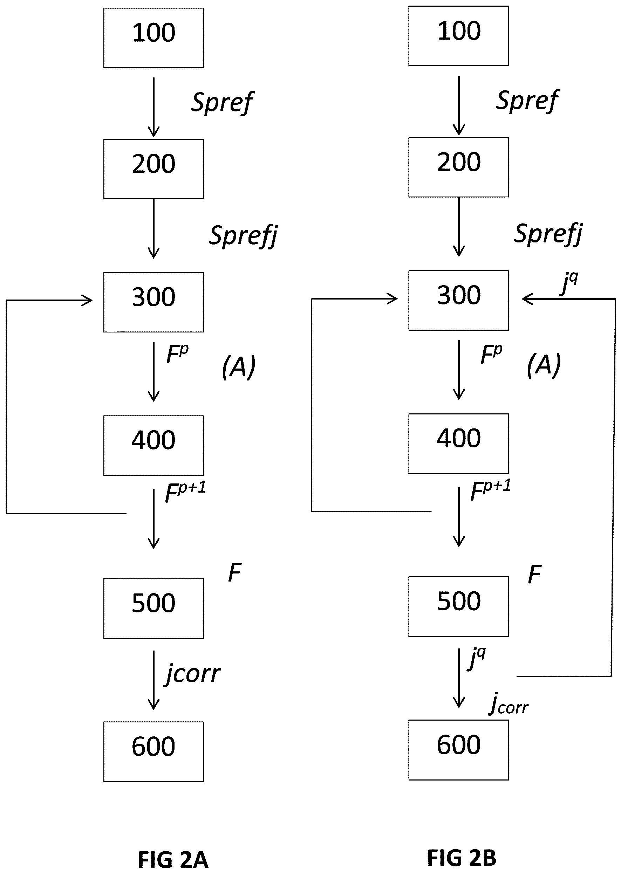

Le procédé de calibration, mis en oeuvre par le circuit électronique de calibration 40, va à présent être décrit, en lien avec la figure 2. Sa fonction est d'établir, un facteur de correction j$_{corr,}$ , ce facteur de correction étant destiné à être appliqué, par la suite, à l'amplitude d'un signal S collecté par une électrode, et plus particulièrement par l'anode. Ce circuit de calibration est mis en oeuvre lorsque le dispositif de détection 1 se trouve dans un mode de calibration.

L'idée de base de la calibration est d'irradier le dispositif de détection 1 à l'aide d'une source de rayonnement ionisant connue, dite source de référence S$_{ref}$, pour laquelle la réponse théorique du dispositif de détection est connue. Il s'agit alors d'analyser les signaux produits en réponse à cette irradiation, et de déterminer une correction appropriée, sur la base de la réponse théorique du détecteur face à cette source de référence, cette réponse théorique pouvant être qualifiée de réponse de référence.

La figure 2 représente les étapes d'un premier mode de réalisation du procédé de calibration. Dans une première étape 100, on place une source de référence S$_{ref}$ face au dispositif de détection 1, sachant que la réponse Sp$_{ref}$ du dispositif, dans cette configuration, est connue. Dans cet exemple, la réponse du détecteur est un spectre en énergie, produit par le détecteur en réponse à la source.

Par spectre en énergie, on entend la distribution en amplitude des signaux S issus d'une électrode E au cours de l'exposition du détecteur à une source de rayonnement. Un tel spectre se présente sous la forme d'un histogramme Sp, dont chaque terme Sp(i) représente le nombre de signaux détectés par l'électrode considérée, et dont l'amplitude est égale à i. Par amplitude égale à i ; on entend une amplitude comprise dans une plage d'amplitude $\Delta i$ comprenant la valeur i, et par exemple centrée autour de la valeur i. Chaque canal d'amplitude i correspond à une énergie connue.

Cette réponse peut être déterminée en modélisant le détecteur. Elle peut également être déterminée expérimentalement, en adoptant une durée d'acquisition suffisamment longue pour être statistiquement représentative.

Dans l'exemple considéré, la réponse de référence $Sp_{ref}$ est un spectre en énergie correspondant au spectre « théoriquement » produit par le détecteur 11 en réponse à la source de référence Sref.

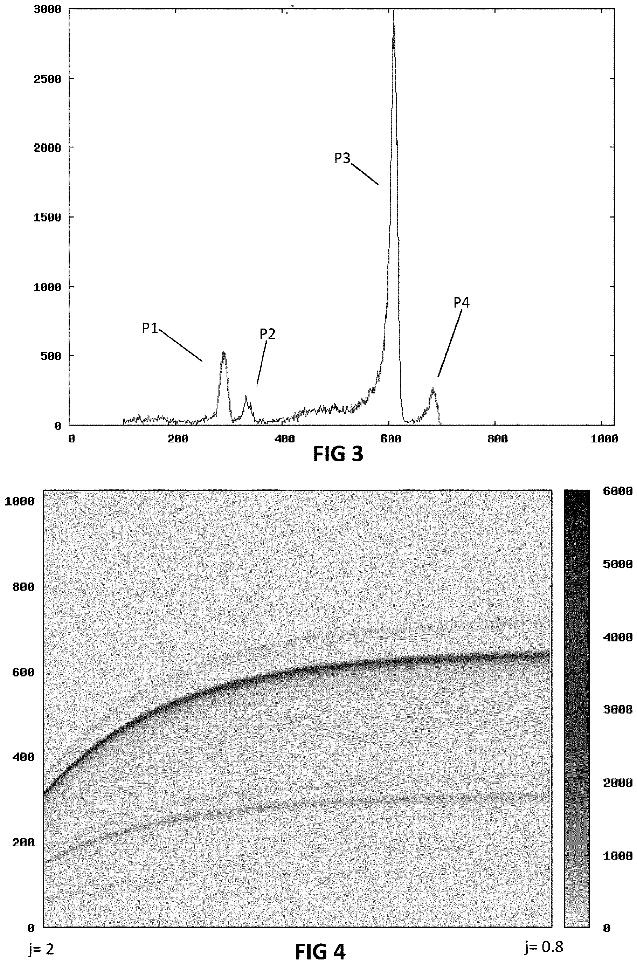

La figure 3 représente un tel spectre de référence $Sp_{ref}$. Il comporte plusieurs pics P1, P2, P3, P4 se distinguant du bruit de fond B. Il est préférable que le spectre de référence initial Spref comporte au moins un pic, et de préférence une pluralité de pics, de préférence entre 1 et 20 pics. De préférence, la largeur à mi-hauteur d'un pic est inférieure au dixième, voire au vingtième ou au trentième de la dynamique du spectre, cette dernière correspondant à la plage d'amplitude selon laquelle est enregistrée le spectre. De préférence, chaque pic a une hauteur supérieure à au moins deux fois, mieux au moins cinq fois le niveau du bruit de fond de part et d'autre du pic. L'exemple de la figure 3 représente le spectre d'une source de $^{57}Co$. On distingue le pic photoélectrique, qui correspond à l'émission de photons gamma d'énergie 122 keV, ainsi que des pics de fluorescence X du matériau constituant le collimateur de la source, en l'occurrence du Tungstène.

Un tel spectre $Sp_{ref}$ peut être assimilé à une distribution de probabilité de mesurer une amplitude donnée connaissant la source de référence irradiant le détecteur.

La première étape 100 du procédé de calibration est de charger un spectre de référence Spref, correspondant à une source de référence Sref. Ce spectre de référence est désigné spectre de référence initial.

La deuxième étape 200 a pour objectif d'établir, à partir du spectre de référence initial $Sp_{ref}$, une pluralité de spectres de référence $Sp_{refj}$, chacun étant associé à un coefficient de correction j. Chaque spectre $Sp_{refj}$ correspond au spectre de référence initial $Sp_{ref}$ moyennant la prise en compte d'un facteur de correction égal à j. Un coefficient de correction j est un coefficient strictement positif, compris entre une valeur minimale $j_{min}$ et une valeur maximale $j_{max}$. $j_{min}$ et $j_{max}$ sont définis arbitrairement. Dans cet exemple, $0.8 \leq j \leq 2$. De préférence, l'intervalle $j_{min} < 1$ et $j_{max} > 1$. Les valeurs de j sont sélectionnées sont prédéterminées.

Plus précisément, si $Sp_{ref}$ (i) désigne la valeur du spectre $Sp_{ref}$ correspondant au canal d'amplitude i, le spectre de référence associé au coefficient de correction j peut s'écrire $Spref_j$ (i) = $Sp_{ref}$ (i/j). Chaque, chaque canal d'un spectre $Sp_{refj}$ représente le nombre de signaux collectés dont l'amplitude est située dans un intervalle $\frac{\Delta i}{j}$ centré autour de la valeur $\frac{i}{j}$.

L'égalité précédente peut également comporter un terme de normalisation $K_{norm}(j)$, pouvant être égal à 1 ou égal à 1/j, auquel cas

$$Sprefj\,(i) = \frac{Spref\,(i/j)}{j}\,(1)$$

L'utilisation de ce terme de normalisation permet alors de conserver l'intégrale du spectre constante.

Lorsque le coefficient de correction j est supérieur à 1, le spectre de référence $Spref_j$ correspond à une compression du spectre de référence initial Spref, dans la mesure où l'information du spectre est concentrée sur un nombre de canaux inférieurs au nombre de canaux constituant le spectre Spref.

Inversement, lorsque le coefficient de correction j est inférieur à 1, le spectre de référence $Spref_j$ correspond à une dilatation du spectre de référence initial Spref, l'information du spectre étant dilatée selon un nombre de canaux supérieurs au nombre de canaux constituant le spectre de référence initial Spref.

La figure 4 représente plusieurs spectres de référence $Spref_j$ associés à un coefficient de correction j compris entre 0.8 et 2. Plus précisément, chaque colonne de la figure 4, correspondant à une abscisse j, représente un spectre de référence $Spref_j$. Ainsi, à chaque point (j,i) est affectée un poids $P_{ji}$, indiqué par l'échelle de niveaux de gris, ce poids représentant la valeur du spectre $Sp_{refj}$ à l'amplitude i, de telle sorte que $P_{ji}$ = Sprefj(i). L'échelle des abscisses de la figure 4 n'est pas linéaire.

Ainsi, chaque colonne de la figure 4 représente une répartition de probabilité de l'amplitude mesurée par le détecteur, sachant le coefficient de correction j, lorsque le détecteur est irradié par la source de référence Sref, le coefficient de correction j étant l'abscisse de la colonne. Par ailleurs, chaque ligne de la figure 4, correspondant à une amplitude i, représente une distribution de probabilité du coefficient de correction j, lorsque cette amplitude est mesurée, le détecteur étant irradié par la source de référence Sref.

Autrement dit, le détecteur étant irradié par la source de référence Sref, si on mesure un signal S d'amplitude A, la distribution formée par l'ensemble des valeurs Sprefj(A), pour j compris entre $j_{min}$ et $j_{max}$, correspond à une distribution de probabilité du facteur de correction j à appliquer, sachant la mesure de cette amplitude A.

En construisant une pluralité de spectres de référence $Spref_j$, correspondant à chaque colonne d'abscisse j de la figure 4, on peut établir une pluralité de distribution de probabilité, d'un facteur de correction j, connaissant une amplitude mesurée A. Ces distributions seront utilisées dans la prochaine étape.

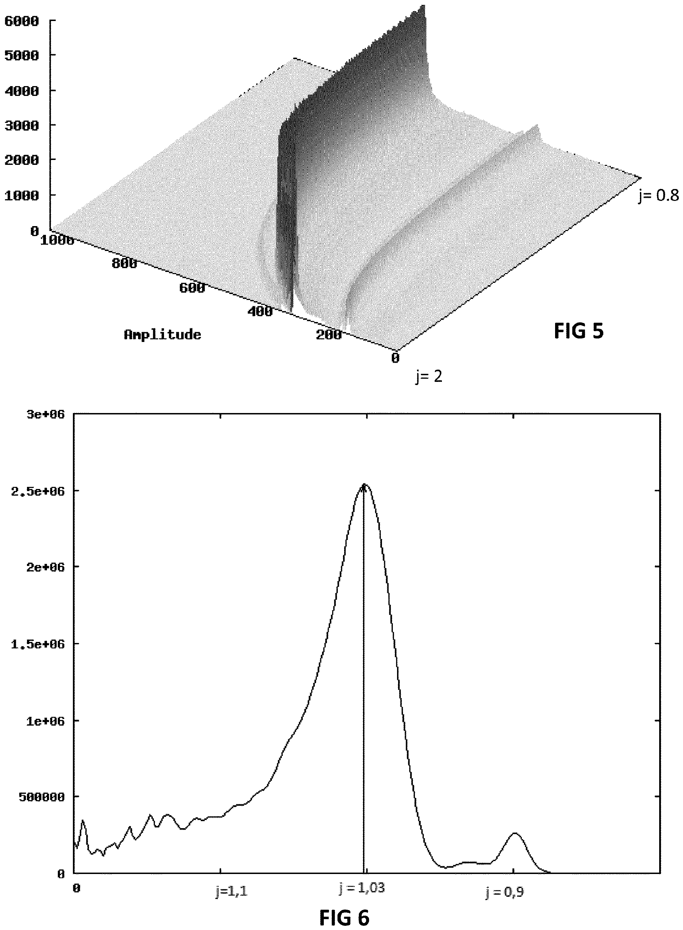

La figure 5 est une représentation en 3 dimensions de la figure 4. Chaque profil, correspondant à une valeur de coefficient de correction j fixe, représente un spectre de référence Sp$_{refj}$.

La troisième étape 300 consiste à irradier le détecteur en utilisant une source de rayonnement de référence Sref, correspondant au spectre de référence Spref. Lors de chaque interaction, un signal S est collecté aux bornes d'une électrode E (anode 13, anode élémentaire 13x ou cathode 12), ce signal étant alors traité par le circuit d'amplification 3 rattaché à l'électrode E.

La quatrième étape 400 consiste à établir une fonction de calibration F. Plus précisément, lors de cette étape, on met à jour la fonction de calibration F en fonction du signal S collecté lors de l'étape 300, et en particulier en fonction de son amplitude.

Initialement, chaque fonction de calibration F est initialisée à une valeur prédéterminée, par exemple à une valeur nulle : quel que soit j, F(j) = 0. Cette quatrième étape du procédé consiste à mettre à jour chaque fonction F de telle sorte qu'à chaque fois qu'une interaction est détectée, on additionne, à chaque terme F(j), la valeur du spectre de référence corrigé Spref$_j$ correspondant à l'amplitude A du signal mesuré à chaque interaction, et cela pour j compris entre j$_{min}$ et j$_{max}$.

Autrement dit, à chaque interaction détectée, on met à jour la fonction de calibration F selon l'équation itérative :

Pour tout j compris entre j$_{min}$ et j$_{max}$, F$^p$(j) = F$^{p-1}$(j)+Spref$_j$(A)

où :

- F$^{p-1}$(j) est la valeur du terme F(j) précédent l'itération i

- F$^p$(j) est la valeur du terme F(j) après l'itération i

- A est l'amplitude du signal S mesuré par une électrode, par exemple l'anode suite à chaque interaction.

Cette mise à jour itérative est réalisée pour une pluralité d'interactions détectées, jusqu'à l'atteinte d'un critère d'arrêt, par exemple un nombre prédéterminé d'itérations ou une valeur maximale atteinte par une ou plusieurs valeurs de la fonction F.

La figure 6 représente une fonction de calibration obtenue après 1000 mises à jour, ce nombre étant généralement compris entre quelques centaines et quelques milliers L'axe des abscisses représente les coefficients de corrections j, compris entre j$_{min}$ et j$_{max}$. L'axe des ordonnées représente les valeurs de la fonction de calibration F(j).

Chaque terme F(j) est proportionnel à la probabilité que le facteur de correction j$_{corr}$, à appliquer à chaque interaction, soit égal à j.

La cinquième étape 500 est la détermination du facteur de correction j$_{corr}$ en fonction d'un point remarquable de la fonction de calibration F, et par exemple en fonction du coefficient de correction j pour lequel la fonction F prend une valeur maximale.

Dans cet exemple, j$_{corr}$ = argmax [F(j)]. En se ramenant à l'exemple de la figure 6, Cette fonction de calibration prend sa valeur maximale pour j = 1,03. Ainsi, selon cet exemple, j$_k$ =1,03. Cela signifie que le facteur de correction à appliquer au signal S de l'anode, et en particulier à son amplitude, est égal à j$_{corr}$ = 1,03.

Selon une variante de ce mode de réalisation, représentée sur la figure 2B, les étapes c) à e) peuvent être réalisées de façon itérative, le facteur de correction déterminé lors de l'étape e) de chaque itération q étant qualifié de facteur de correction partiel, et noté j$^q$. Au-delà de la première itération, lors de la mise à jour de la fonction de calibration F, l'amplitude A du signal S est pondérée par le produit des facteurs de correction dits partiels j$^1$...j$^{q-1}$, déterminés lors de l'itération précédente ou lors des q-1 itérations précédentes, q désignant le rang de l'itération. Ce produit est à considérer comme un facteur de correction intermédiaire.

Par exemple, l'étape d) comprend une mise à jour itérative de la fonction de calibration F telle que Pour tout j compris entre j$_{min}$ et j$_{max}$, où :

$$F^{p,q}(j) = F^{p-1,q}(j) + Sprefj\left(\prod_{l=1}^{q-1} j^l \times A\right)$$

- F$^{p-1,q}$(j) est la valeur du terme F (j) précédent la p$^{ème}$ itération (itération de mise à jour de la fonction de calibration), lors de l'itération de rang q (itération de détermination d'un facteur de correction partiel)

- F$^{p,q}$(j) est la valeur du terme F$_k$(j) après la p$^{ème}$ itération (itération de mise à jour de la fonction de calibration), lors de la série de rang q (itération de détermination d'un facteur de correction partiel)

- A est l'amplitude du signal S mesuré par une électrode suite à une interaction. Dans cet exemple, on considère le signal S$_{A0}$ mesuré par l'anode gagnante A0, donc A = A$_{A0}$.

- p est l'indice d'itération correspondant au rang de la mise à jour de la fonction de calibration. Lors de la première mise à jour, p= 1.

- j$^l$ est le facteur de correction partiel avec 1≤l≤q-1

Les étapes c) à e) sont alors renouvelées jusqu'à l'atteinte d'un critère d'arrêt : il peut s'agir d'un nombre d'itérations prédéterminé, ou d'un faible écart entre deux facteurs de correction partiels j$^q$ et j$^{q+1}$ successifs .Typiquement, selon cette variante, le nombre Q d'itérations est compris entre 2 et 10.

On constate qu'au fur et à mesure des itérations, les facteurs de correction partiels j$^q$ tendent vers la valeur 1.

Lors de la dernière itération, l'étape e) comprend la détermination du le facteur de correction j$_{corr}$ en réalisant le produit des facteurs de corrections partiels j$^1$ ...j$^Q$ successivement acquis lors de chaque série.

Ainsi, selon lors de l'étape e) de la dernière itération, on peut déterminer $j_{corr}$ tel que :

$$j_{corr} = \prod_{q=1}^{q=Q} j^q$$

Lors d'une étape 600, le facteur de correction $j_{corr}$ est stocké dans une mémoire 50.

Lorsque le détecteur 1 comprend une pluralité d'anodes comme représenté sur la figure 1B, la calibration est effectuée pour chaque anode élémentaire, chacune d'entre elle étant affectée d'un facteur de correction $j_{corr}$ qui lui est propre. Chaque facteur de correction, correspondant à une anode élémentaire, est alors stocké dans la mémoire 50.

On va à présent décrire un exemple de fonctionnement d'un dispositif de détection tel que schématisé à la figure 1A.

Lorsqu'une interaction survient dans le matériau détecteur 11, elle engendre un signal sur la cathode 12 et sur l'anode 13. Le circuit de correction 60 applique le paramètre de correction $j_{corr}$, stocké dans la mémoire 50, au signal émis par l'anode, et corrige l'amplitude A mesurée, de telle façon que A* = $j_{corr}$ x A, A* désignant l'amplitude corrigée. Durant ce mode de fonctionnement, le circuit de calibration 40 n'est pas utilisé.

Selon le mode de réalisation représenté sur la figure 1B, lorsqu'une interaction survient dans le matériau détecteur 11, elle engendre un signal sur la cathode 12 et sur les anodes élémentaires $13_1...13x$. Le circuit de localisation 30 détermine l'anode élémentaire ayant collecté le signal maximal. Le circuit de correction 60 applique le paramètre de correction $j_{corr}$ associé à l'anode sélectionnée, stocké dans la mémoire 50, au signal émis par l'anode précédemment sélectionnée, et corrige l'amplitude A mesurée, de telle façon que A* = $j_{corr}$ x A, A* désignant l'amplitude corrigée. Durant ce mode de fonctionnement, le circuit de calibration 40 n'est pas utilisé.

Dans les exemples décrits ci-dessus, le matériau détecteur 11 est un semi-conducteur. L'invention s'applique lorsque le détecteur 10 comprend un matériau scintillateur couplé à un photodétecteur, le photodétecteur comportant une électrode apte à générer un signal dont l'amplitude dépend de l'énergie perdue dans le matériau détecteur au cours de chaque interaction.

**Revendications**

1. Procédé de calibration d'un dispositif de détection (1) de rayonnement ionisant, le dispositif (1) comportant un détecteur (10) apte à générer des charges électriques sous l'effet d'une interaction d'un rayonnement ionisant dans ledit détecteur, le procédé comportant les étapes suivantes :

   a) irradiation du détecteur (10) à l'aide d'une source de référence (Sref) connue, de façon à générer des interactions dans le détecteur ;
   b) sélection d'une pluralité de coefficients de correction (j) et détermination de spectres de références (Sp$_{refj}$), chaque spectre de référence étant associé à un facteur de correction (j), chaque spectre de référence représentant une distribution de l'amplitude (A) du signal (S) détecté lorsque le détecteur est irradié par ladite source de référence (Sref), l'amplitude (A) du signal détecté étant modulée par ledit facteur de correction (j) ;
   c) détection d'une pluralité d'interactions dans le détecteur lors de ladite irradiation et, pour chaque interaction, mesure de l'amplitude A d'un signal électronique S généré par ledit détecteur ;
   d) pour chaque interaction détectée, détermination d'une fonction de calibration F telle que :

   ▪ chaque fonction de calibration F est définie sur une pluralité de coefficients de correction j,
   ▪ chaque terme F(j) de ladite fonction de calibration représente une probabilité associée audit coefficient de correction j,
   ▪ chaque terme F(j) étant mis à jour, à chaque interaction détectée, en combinant l'amplitude A mesurée au cours de cette interaction avec chaque spectre de référence Sp$_{ref}$j,

   e) détermination d'un facteur de correction $j_{corr}$ en identifiant un point remarquable de ladite fonction de calibration F.

2. Procédé de calibration selon la revendication 1, dans lequel l'étape d) comprend :

   i l'initialisation de ladite fonction de calibration F ;
   ii à chaque interaction détectée, mise à jour de la fonction de calibration F, en additionnant, à chaque terme F (j) de cette fonction, la valeur du spectre de référence corrigé Spref$_j$ (A) à ladite amplitude A ;
   iii la répétition de l'étape ii jusqu'à l'atteinte d'un critère d'arrêt prédéfini.

3. Procédé de calibration selon l'une des revendications précédentes, dans lequel l'étape e) comprend la détermination du facteur de correction $j_{corr}$ en identifiant la valeur de j maximisant la valeur de la fonction F auquel cas :

$$j_{corr} = argmax_j \left[ F(j) \right] .$$

4. Procédé de calibration selon l'une des revendications précédentes, dans lequel :

■ les étapes c), d) et e) sont répétées de façon itérative, chaque étape e) aboutissant à la détermination d'un facteur de correction partiel, q désignant le rang de l'itération,
■ et dans lequel, suite à la première itération, l'étape d) comprend la mise à jour de chaque terme F (j) en pondérant ladite amplitude A par le produit des facteurs de correction partiels $j^1...j^q$, ces facteurs ayant déterminés au cours des q itérations précédentes,

le procédé comportant alors, lors de l'étape e) de la dernière itération, la détermination du facteur de correction $j_{corr}$ en fonction du produit des facteurs de correction partiels $j^1...j^Q$ déterminés lors desdites itérations successives, Q désignant le nombre d'itérations.

**5.** Procédé de calibration selon l'une des revendications précédentes, dans lequel l'étape b) comprend :

i le chargement d'un spectre de référence initial $Sp_{ref}$, préalablement enregistré dans une mémoire, correspondant à ladite source de référence $S_{ref}$, ce spectre $Sp_{ref}$ représentant la distribution de l'amplitude du signal détecté lorsque le détecteur est irradié par ladite source de référence $S_{ref}$;
ii à partir du spectre de référence initial $Sp_{ref}$, détermination d'une pluralité de spectres de références $Sp_{refj}$, chaque spectre de référence $Sp_{refj}$ étant obtenu à partir du spectre de référence initial $Sp_{ref}$, chaque valeur $Sp_{refj}(i)$ du spectre de référence étant obtenu à partir de la valeur Spref(i/j).

**6.** Procédé de calibration selon l'une des revendications précédentes, le détecteur (10) comprenant un matériau détecteur scintillateur ou un matériau détecteur(11) semi-conducteur.

**7.** Dispositif de détection d'un rayonnement ionisant, comprenant :

a) un détecteur (10), le détecteur étant apte à générer des porteurs de charges sous l'effet d'une interaction avec ledit rayonnement ionisant ;
b) un circuit électronique d'amplification (22, 23), apte à former un signal S à partir de porteurs de charges collectés par une électrode lors d'une interaction et d'en déterminer l'amplitude A ;
ledit dispositif étant **caractérisé en ce qu'**il comporte en outre
c) un circuit électronique de calibration (40), configuré pour mettre en oeuvre les étapes b) à e) de l'un des procédés objet des revendications 1 à 6.

**Patentansprüche**

**1.** Verfahren zum Kalibrieren einer Vorrichtung (1) zum Erfassen von ionisierender Strahlung, wobei die Vorrichtung (1) einen Detektor (10) enthält, der dazu geeignet ist, elektrische Ladungen unter der Wirkung einer Wechselwirkung einer ionisierenden Strahlung in dem Detektor zu erzeugen, wobei das Verfahren die nachstehenden Schritte umfasst:

a) Bestrahlen des Detektors (10) mittels einer bekannten Referenzquelle (Sref), so dass in dem Detektor Wechselwirkungen erzeugt werden;
b) Auswählen einer Vielzahl von Korrekturkoeffizienten (j) und Bestimmen von Referenzspektren ($Sp_{refj}$), wobei jedes Referenzspektrum einem Korrekturfaktor (j) zugeordnet wird, wobei jedes Referenzspektrum eine Verteilung der Amplitude (A) des Signals (S) darstellt, das erfasst wird, wenn der Detektor von der Referenzquelle (Sref) bestrahlt wird, wobei die Amplitude (A) des erfassten Signals mit dem Korrekturfaktor (j) moduliert wird;
c) Erfassen einer Vielzahl von Wechselwirkungen in dem Detektor bei der Bestrahlung und für jede Wechselwirkung Messen der Amplitude A eines vom Detektor erzeugten elektronischen Signals S;
d) für jede erfasste Wechselwirkung Bestimmen einer Kalibrierungsfunktion F, so dass:

■ jede Kalibrierungsfunktion F über eine Vielzahl von Korrekturkoeffizienten j definiert ist,
■ jeder Term F(j) der Kalibrierungsfunktion eine Wahrscheinlichkeit darstellt, die dem Korrekturkoeffizienten j zugeordnet ist,
■ jeder Term F(j) bei jeder erfassten Wechselwirkung aktualisiert wird, indem die während dieser Wechselwirkung gemessene Amplitude A mit jedem Referenzspektrum $Sp_{refj}$ kombiniert wird,

e) Bestimmen eines Korrekturfaktors $j_{corr}$ durch Identifizieren eines relevanten Punktes der Kalibrierungsfunktion F.

**2.** Kalibrierungsverfahren nach Anspruch 1, wobei der Schritt d) umfasst:

i Initialisieren der Kalibrierungsfunktion F;
ii für jede erfasste Wechselwirkung Aktualisieren der Kalibrierungsfunktion F, indem bei jedem Term F(j) dieser Funktion der Wert des korrigierten Referenzspektrums $Sp_{refj}$ (A) zur Amplitude A hinzuaddiert wird;

iii Wiederholen des Schrittes ii, bis ein vordefiniertes Anhaltekriterium erreicht ist.

3. Kalibrierungsverfahren nach einem der vorangehenden Ansprüche, wobei der Schritt e) das Bestimmen des Korrekturfaktors $j_{corr}$ umfasst, indem der Wert von j identifiziert wird, der den Wert der Funktion F maximiert, wobei dann

$$j_{corr} = argmax_j \, [F(j)].$$

4. Kalibrierungsverfahren nach einem der vorangehenden Ansprüche, wobei

 ▪ die Schritte c), d) und e) iterativ wiederholt werden, wobei jeder Schritt e) zur Bestimmung eines Teilkorrekturfaktors führt, wobei q den Rang der Iteration bezeichnet,
 ▪ und wobei nach der ersten Iteration der Schritt d) das Aktualisieren jedes Terms F(j) durch Gewichtung der Amplitude A mit dem Produkt der Teilkorrekturfaktoren $j^1 ... j^q$ umfasst, wobei diese Faktoren während der vorherigen q Iterationen bestimmt wurden,

 wobei das Verfahren dann in Schritt e) der letzten Iteration das Bestimmen des Korrekturfaktors $j_{corr}$ in Abhängigkeit von dem Produkt der in den aufeinanderfolgenden Iterationen bestimmten Teilkorrekturfaktoren $j^1 ... j^Q$ umfasst, wobei Q. die Anzahl der Iterationen bezeichnet.

5. Kalibrierungsverfahren nach einem der vorangehenden Ansprüche, wobei der Schritt b) umfasst

 i Laden eines anfänglichen Referenzspektrums $Sp_{ref}$, das zuvor in einem Speicher aufgezeichnet wurde, entsprechend der Referenzquelle $S_{ref}$, wobei dieses Spektrum $Sp_{ref}$ die Verteilung der Amplitude des Signals darstellt, das erfasst wird, wenn der Detektor von der Referenzquelle $S_{ref}$ bestrahlt wird,
 ii ausgehend von dem anfänglichen Referenzspektrum $Sp_{ref}$ Bestimmen einer Vielzahl von Referenzspektren $Sp_{refj}$, wobei jedes Referenzspektrum $Sp_{refj}$ aus dem anfänglichen Referenzspektrum $Sp_{ref}$ erhalten wird, wobei jeder Wert $Sp_{refj}(i)$ des Referenzspektrums aus dem Wert Spref(i/j) erhalten wird.

6. Kalibrierungsverfahren nach einem der vorangehenden Ansprüche, wobei der Detektor (10) ein szintillierendes Detektormaterial oder ein Halbleiterdetektormaterial (11) enthält.

7. Vorrichtung zum Erfassen einer ionisierenden Strahlung, enthaltend:

 a) einen Detektor (10), wobei der Detektor dazu geeignet ist, Ladungsträger unter der Wirkung einer Wechselwirkung mit der ionisierenden Strahlung zu erzeugen;
 b) eine elektronische Verstärkerschaltung (22, 23), die dazu geeignet ist, ein Signal S ausgehend von Ladungsträgern zu bilden, die von einer Elektrode während einer Interaktion gesammelt werden, und daraus die Amplitude A zu bestimmen;

 wobei die Vorrichtung **dadurch gekennzeichnet ist, dass** sie ferner enthält:
 c) eine elektronische Kalibrierungsschaltung (40), die dazu ausgelegt ist, um die Schritte b) bis e) eines Verfahrens nach den Ansprüche 1 bis 6 auszuführen.

**Claims**

1. Method for calibrating a device (1) for detecting ionising radiation, the device (1) comprising a detector (10) capable of generating electrical charges under the effect of an interaction between ionising radiation in said detector, the method including the following steps:

 a) irradiation of the detector (10) using a known reference source (Sref) so as to generate interactions in the detector,
 b) selection of a plurality of correction factors (j), and determination of reference spectra ($Sp_{refj}$), each reference spectrum being associated with a correction factor (j), each reference spectrum representing a distribution of the amplitude (A) of the signal (S) detected when the detector is irradiated by said reference source (Sref), the amplitude (A) of the detected signal being modulated by said correction factor (j);
 c) detection of a plurality of interactions in the detector during said irradiation and, for each interaction, measurement of the amplitude A of an electronic signal S generated by said detector;
 d) for each detected interaction, determination of a calibration function F such that:

 ▪ each calibration function F is defined on a plurality of correction factors j,
 ▪ each term F(j) of said calibration function represents a probability associated with said correction factor j
 ▪ each term F(j) being updated at each detected interaction, by combining the amplitude A measured during this interaction with each reference spectrum $Sp_{refj}$,

e) determination of a correction factor $j_{corr}$ by identifying a remarkable point of said calibration function F.

2. Calibration method according to claim 1, in which each step d) comprises:

i initialisation of said calibration function F;
ii at each detected interaction, update the calibration function F, by adding the value of the corrected reference spectrum $Spref_j$ (A) to each term F (j) in this function, at said amplitude A,
iii repeat step ii until a predefined stop criterion is reached.

3. Calibration method according to one of the above claims, in which step e) includes determination of the correction factor $j_{corr}$ by identifying the value of j that maximises the value of the function F, in which case:

$$j_{corr} = argmax_j [F(j)]$$

4. Calibration method according to one of the above claims, in which:

■ steps c), d) and e) are repeated iteratively, each step e) leading to the determination of a partial correction factor, where q denotes the iteration rank,
■ and in which, following the first iteration, step d) comprises the update of each term F(j) by weighting said amplitude A by the product of partial correction factors $j^1...j^q$, these factors having been determined during the previous q iterations.

step e) in the last iteration of the method then consisting of determining the correction factor $j_{corr}$ as a function of the product of partial correction factors $j^1...j^Q$ determined during said successive iterations, where Q denotes the number of iterations.

5. Calibration method according to one of the above claims, in which step b) comprises:

i load an initial reference spectrum $Sp_{ref}$ previously saved in a memory, corresponding to said reference source $S_{ref}$, this spectrum $Sp_{ref}$ representing the distribution of the amplitude of the detected signal when the detector is irradiated by said reference source $S_{ref}$;
ii starting from the initial reference spectrum

$Sp_{ref}$, determine a plurality of reference spectra $Sp_{refj}$, each reference spectrum $Sp_{refj}$ having been obtained from the initial reference spectrum $Sp_{ref}$, each value $Sp_{refj}(i)$ of the reference spectrum being obtained from the value Spref (i/j).

6. Calibration method according to one of the above claims, the detector (10) comprising a scintillator detection material or a semiconducting detection material (11).

7. Device for detection of ionising radiation comprising:

a) a detector (10), the detector being capable of generating charge carriers under the effect of an interaction with said ionising radiation;
b) an electronic amplification circuit (22, 23) capable of forming a signal S from charge carriers collected by an electrode during an interaction and determining its amplitude A;
said device being **characterised in that** it also comprises
c) an electronic calibration circuit (40) configured to implement steps b) to e) in one of the methods according to claims 1 to 6.

FIG 1A

FIG 1B

**FIG 2A**          **FIG 2B**

**FIG 3**

j= 2      **FIG 4**      j= 0.8

**FIG 5**

**FIG 6**

**EP 3 237 932 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011297838 A

- FR 2950979